# EUROPÄISCHE PATENTSCHRIFT

(11) **EP 3 095 636 B1**
(45) Veröffentlichungstag und Bekanntmachung des Hinweises auf die Patenterteilung: **19.03.2025**
(21) Anmeldenummer: 16000858.7
(22) Anmeldetag: 15.04.2016
(51) Int. Cl.: B60L 3/00, B60K 6/28, B60L 7/14, H02J 7/00, B60L 50/40, B60L 58/12, H02J 7/34, H02J 7/14

(54) **SCHALTUNGSANORDNUNG ZUM ENTLADEN EINES ENERGIESPEICHERS EINES KRAFTFAHRZEUGS**
CIRCUIT ARRANGEMENT FOR DISCHARGING AN ENERGY STORAGE OF A MOTOR VEHICLE
SYSTEME DE CIRCUIT DESTINE AU DECHARGEMENT D'UN ACCUMULATEUR D'ENERGIE ELECTRIQUE D'UN VEHICULE AUTOMOBILE

(30) Priorität: 19.05.2015 DE 102015006416
(43) Veröffentlichungstag der Anmeldung: 23.11.2016
(73) Patentinhaber: MAN Truck & Bus SE, 80995 München (DE)
(72) Erfinder: Müller, Anton, 82327 Tutzing (DE); John, Dennis, 81371 München (DE)
(74) Vertreter: v. Bezold & Partner Patentanwälte - PartG mbB

(56) Entgegenhaltungen:
- WO-A2-2011/029702
- DE-A1- 102012 100 951
- DE-A1- 102012 201 827
- JP-A- 2006 166 495
- JP-A- 2011 250 494
- JP-A- H09 149 509
- US-A1- 2009 268 354
- US-A1- 2010 214 055
- US-A1- 2012 019 178

## Beschreibung

Die Erfindung betrifft eine Schaltungsanordnung zum Entladen eines Energiespeichers eines Kraftfahrzeugs, insbesondere zum Entladen eines Energiespeichers für elektrische Energie, der zur Versorgung einer elektrischen Maschine eines Kraftfahrzeugs vorgesehen ist.

In Mildhybrid-, Hybrid- und Elektrofahrzeugen kommen neben oder anstatt einer konventionellen 12 V- oder 24 V-Bleisäurebatterie zusätzliche elektrische Energiespeicher zum Einsatz, die zur Versorgung einer elektrischen Maschine im Antriebsstrang vorgesehen sind. Ein derartiger zusätzlicher Energiespeicher ist häufig als Lithium-Ionen-Akkumulator oder als hochkapazitiver Energiespeicher ausgebildet. Hochkapazitive Energiespeicher auf der Basis von Doppelschichtkondensatoren sind besonders günstig hinsichtlich Kapazität pro Masse. Hierbei kommen bevorzugt sogenannte Ultrakondensatoren (kurz auch als Ultracap oder Ultracap-Speicher bezeichnet) zum Einsatz.

Die DE 10 2012 100 951 A1 betrifft eine Zusatzschaltung zur aktiven schnellen Entladung eines Zwischenkreises eines Stromrichters über einen PCT-Widerstand, wobei die Entladung vom Leitungszustand des Lastpfads eines Leistungsschalters abhängt, dessen Steuerspannung von der Zwischenkreisspannung abgegriffen wird. Die US 2009/0268354 A1 offenbart einen Ansatz zum Entladen eines Hochspannungs-Bus, der mit einem Entladekreis gekoppelt ist. Der Entladekreis wird deaktiviert, falls beim Entladevorgang die Werte zweier nacheinander bestimmter Spannungswerte kleiner als ein Schwellenwert sind. Die JP 2011-250494 A offenbart ein Fahrzeugenergieversorgungssystem, wobei bei einem geparkten Fahrzeug, falls eine Temperatur einen vorbestimmten Wert überschreitet und ein Doppelschichtkondensator vollständig geladen ist, eine Batterie mit Energie von dem Doppelschichtkondensator geladen wird. Die US 2010/0214055 A1 offenbart einen Inverter eines elektrischen Fahrzeugs und einen Fahrzeugkontroller, der einen Kollisionszustand detektieren kann. Falls dies der Fall ist, wird ein Hauptinverter-Verbindungsschalter einer Hochvoltbatterie geöffnet, um die Spannungsversorgung von der Batterie zu einem Gleichspannungs-Bus zu unterbrechen.

Beim Einsatz von Energiespeichern im Antriebsstrang mit hoher Leistungsfähigkeit und geringem Energieinhalt, wie es zum Beispiel Ultrakondensatoren sind, werden diese normalerweise vor dem Abstellen des Fahrzeugs im letzten Abbremsvorgang bis nahe der maximalen Nutzspannung aufgeladen. Insbesondere Ultrakondensatoren altern im Zustand hoher Spannung am schnellsten, so dass ein Lagern derartiger Energiespeicher mit hohen Ladespannungen, insbesondere im vollständig aufgeladenen Zustand, schädlich für die Lebensdauerhaltbarkeit des Energiespeichers ist.

Andererseits ist eine automatische vollständige Entladung des Ultrakondensators beim Abstellen des Kraftfahrzeugs oder in einer Stopp-Phase eines Start-Stopp-Betriebs aus energetischer Sicht nicht sinnvoll.

Es ist somit eine Aufgabe der Erfindung, ein Möglichkeit zum Entladen eines Energiespeichers, der zur Versorgung einer elektrischen Maschine im Antriebsstrang vorgesehen ist, bereitzustellen, mit der ein Ladezustand des Energiespeichers so angepasst werden kann, das eine starke Beeinträchtigungen der Lebensdauerhaltbarkeit des Energiespeichers bei längeren Abstellvorgängen vermieden wird und gleichzeitig eine energetische Verschwendung des Energieinhalts des Energiespeichers reduziert werden kann. Der Erfindung liegt insbesondere die Aufgabe einer einfachen und kostensparenden Gestaltung einer solchen Entlademöglichkeit zu Grunde.

Diese Aufgaben werden durch die Merkmale der unabhängigen Ansprüche gelöst. Vorteilhafte Ausführungsformen und Anwendungen der Erfindung sind Gegenstand der abhängigen Ansprüche und werden in der folgenden Beschreibung unter teilweiser Bezugnahme auf die Figuren näher erläutert.

Die Erfindung beruht einerseits auf der technischen Erkenntnis, dass bei längeren Abstellphasen des Kraftfahrzeugs ein Entladen des Energiespeichers auf ein mittleres Spannungsniveau aus energetischer Sicht und aus Lebensdauergesichtspunkten einen guten Kompromiss bietet. Denkbar wäre nun, den Energiespeicher immer dann auf ein mittleres Spannungsniveau zu entladen, wenn ein Abstellen des Fahrzeugs durch ein Öffnen des Zündschalters - Klemme 15 - erkannt wird. Im Rahmen der Erfindung wurde jedoch festgestellt, dass ein Öffnen des Zündschalters anhand des Signals der Klemme 15 nicht notwendigerweise eine längere Abstellphase von Kraftfahrzeugen, insbesondere von Nutzfahrzeugen, anzeigt. Vielmehr wurde festgestellt, dass ein "Zündschalter aus"-Signal der Klemme 15 bei Fahrzeugen, insbesondere Nutzfahrzeugen, oftmals 10 bis 15 mal täglich auftritt, so dass das Starten eines Entladevorgangs unmittelbar nach Erkennung eines Klemme 15-Signals, das ein Abstellen des Fahrzeugs anzeigt, aus energetischer Sicht nachteilig wäre. Vielmehr ist es vorteilhaft, nach Erkennung eines Abstellvorgangs des Kraftfahrzeugs eine Latenzphase abzuwarten, bevor ein Entladevorgang des Energiespeichers auf ein mittleres Spannungsniveau eingeleitet wird.

Gemäß allgemeinen Gesichtspunkten der Erfindung wird ein Kraftfahrzeug mit einer Schaltungsanordnung zum Entladen eines Energiespeichers eines Kraftfahrzeugs bereitgestellt. Die Schaltungsanordnung umfasst einen Energiespeicher für elektrische Energie, der zur Versorgung einer elektrischen Maschine eines Kraftfahrzeugs vorgesehen ist, die vorzugsweise als Traktionsmaschine oder als Kurbelwellenstartergenerator ausgeführt ist, und eine Entladeschaltung. Die Entladeschaltung wird über den Energiespeicher mit Spannung versorgt und weist einen Entladewiderstand, ein Spannungsvergleichsglied und eine Aktivierungsschaltvorrichtung auf, nämlich in Form einer Reihenschaltung aus dem Entladewiderstand, dem Spannungsvergleichsglied und der Aktivierungsschaltvorrichtung.

Hierbei wird mittels der Aktivierungsschaltvorrichtung nach Ablauf einer Latenzphase (Verzögerungsphase) seit einem Abstellen des Kraftfahrzeugs ein Entladevorgang des Energiespeichers über den Entladewiderstand gestartet. Hierbei kann die Aktivierungsschaltvorrichtung eingerichtet sein, nach Ablauf der Latenzphase (Verzögerungsphase) seit einem Abstellen des Kraftfahrzeugs den Entladevorgang des Energiespeichers über den Entladewiderstand zu starten. Die Aktivierungsschaltvorrichtung kann beispielsweise nach Ablauf der Latenzphase (Verzögerungsphase) seit einem Abstellen des Kraftfahrzeugs, z. B. von einer Fahrzeugsteuervorrichtung, extern getriggert werden, den Entladevorgang des Energiespeichers über den Entladewiderstand zu starten. Die Latenzphase kann beispielsweise auf einen Wert festgelegt sein, der in einem Bereich von 5 Minuten bis 1 Stunde, weiter vorzugsweise in einem Bereich von 10 Minuten bis 30 Minuten oder weiter vorzugsweise in einem Bereich von 10 Minuten bis 20 Minuten liegt.

Ferner ist das Spannungsvergleichsglied eingerichtet, einen Spannungsvergleich zwischen einer aktuellen Energiespeicherspannung und einem Spannungsschwellenwert vorzunehmen und den Entladevorgang des Energiespeichers zu beenden, wenn bei dem Spannungsvergleich die aktuelle Energiespeicherspannung kleiner gleich dem Spannungsschwellenwert ist.

Die erfindungsgemäß Schaltungsanordnung ermöglicht somit ein Entladen des Energiespeichers auf einen vorbestimmten Spannungsschwellenwert, der einem mittlerem Spannungsniveau des Energiespeichers entspricht, so dass der Energiespeicher nicht vollständig entladen wird. Dadurch können energieineffiziente Totalentladungen einerseits und eine starke Beeinträchtigungen der Lebensdauerhaltbarkeit des Energiespeichers bei längeren Abstellvorgängen andererseits vermieden werden. Ein besonderer Vorzug der Erfindung liegt ferner darin, dass der Teilentladevorgang nicht sofort beim Abstellen des Fahrzeugs, sondern verzögert, d. h. erst nach Ablauf einer Latenzphase, erfolgt, so dass energieineffiziente Entladevorgänge bei Abstellvorgängen des Kraftfahrzeugs, bei denen der Fahrbetrieb nach einer kurzen Abstellzeit wiederaufgenommen wird, vermieden werden.

Um eine besonders kostengünstige Realisierung der Entladeschaltung zu ermöglichen, ist es gemäß einer weiteren Ausführungsform der Erfindung von Vorteil, wenn das Spannungsvergleichsglied als passiver Spannungsvergleichsschalter ausgeführt ist. Der Spannungsvergleichsschalter ist hierbei geschlossen, wenn die aktuelle Energiespeicherspannung größer als der Spannungsschwellenwert ist, und geöffnet, wenn die aktuelle Energiespeicherspannung kleiner gleich dem Spannungsschwellenwert ist.

Ferner ist es vorteilhaft, wenn das Spannungsvergleichsglied eine Schalthysterese aufweist, um ein undefiniertes "Pendeln" des Schaltbetriebs um den Spannungsschwellenwert aufgrund von Erholungseffekten des Energiespeichers zu vermeiden.

Gemäß einer ersten erfindungsgemäßen Variante umfasst die Aktivierungsschaltvorrichtung einen Zeitschalter, der nach einer vorbestimmten Latenzzeit nach dem Abstellen des Fahrzeugs, vorzugsweise nach dem Ausschalten eines Zündschalters, geschlossen wird. Nur im geschlossenen Zustand des Zeitschalters ist ein Entladen des Energiespeichers über den Entladewiderstand möglich. Lediglich beispielhaft kann die Latenzzeit im Bereich von 10 bis 30 Minuten liegen. Derartige Zeitschalter sind kostengünstig realisierbar und bieten den Vorteil, dass die Latenzzeit für das Triggern des Entladevorgangs einfach einstellbar ist und auch bei Bedarf je nach Fahrzeugtyp und/oder Nutzungsart des Fahrzeugs auf unterschiedliche Werte voreingestellt werden kann.

Bei einer vorteilhaften Variante dieses Ausführungsbeispiels umfasst die Aktivierungsschaltvorrichtung einen zum Zeitschalter in Reihe angeordneten Schalter, der mit der Klemme 15 des Fahrzeugs gekoppelt ist, derart, dass der Schalter geschlossen ist, wenn an der Klemme 15 das "Zündschalter aus"-Signal vorliegt. Der Schalter ist offen, wenn nicht das "Zündschalter aus"-Signal anliegt, d. h. bei eingeschaltetem Zündschalter. Über die Klemme 15 werden die Zündeinrichtung und die Kraftstoffversorgung des Kraftfahrzeugs mit Strom versorgt. Beim Abstellen einer Brennkraftmaschine geht mit dem Öffnen des Zündschalters die Spannung an der Klemme 15 auf 0 V, was dem Signal "Zündschalter aus" entspricht. Erscheint dieses Signal, so werden die an Klemme 15 angeschlossenen Verbraucher abgeschaltet. Ein Entladevorgang ist gemäß dieser Variante somit nur möglich, wenn sowohl der Schalter, der mit der Klemme 15 des Fahrzeugs gekoppelt ist, als auch der Zeitschalter, geschlossen ist.

Gemäß einer alternativen zweiten erfindungsgemäßen Variante umfasst die Aktivierungsschaltvorrichtung einen Temperaturschalter, der geschlossen wird, wenn ein Temperatursignal einen vorbestimmten Temperaturschwellenwert unterschreitet, wobei das Temperatursignal den Temperaturverlauf eines Bauteils angibt, das sich nach dem Abstellen des Fahrzeugs abkühlt. Nur im geschlossenen Zustand des Temperaturschalters ist ein Entladen des Energiespeichers über den Entladewiderstand möglich. Vorzugsweise ist der vorbestimmte Temperaturschwellenwert so zu wählen, dass eine Abkühldauer des Bauteils von einer Betriebstemperatur auf den Temperaturschwellenwert nach dem Abstellen des Fahrzeugs im Bereich der gewünschten Latenzzeit zum Starten des Entladevorgangs liegt. Das Bauteil, dessen Temperatur zur Bestimmung einer Triggerbedingung für den Entladevorgang erfasst wird, kann die Brennkraftmaschine sein. Alternativ kann auch jedes andere Bauteil, das sich im Fahrbetrieb auf eine Betriebstemperatur erhitzt und im abgestellten Zustand wieder abkühlt, zur Erfassung eines Temperaturschwellenwerts, der anzeigt, dass das Fahrzeug länger als eine vorbestimmte Verzögerungsphase nicht wieder in Betrieb genommen wurde, verwendet werden.

Bei einer vorteilhaften Variante dieses Ausführungsbeispiels umfasst die Aktivierungsschaltvorrichtung analog zum Ausführungsbeispiel mit dem Zeitschalter einen zum Temperaturschalter in Reihe angeordneten Schalter, der mit der Klemme 15 des Fahrzeugs gekoppelt ist, derart, dass der Schalter geschlossen ist, wenn an der Klemme 15 das "Zündschalter aus"-Signal vorliegt.

Eine besonders bevorzugte Ausführungsform sieht vor, dass der Energiespeicher ein kapazitiver Energiespeicher, vorzugsweise ein Ultracap-Speicher ist.

Gemäß einem weiteren Aspekt kann das Kraftfahrzeug ein Nutzfahrzeug sein.

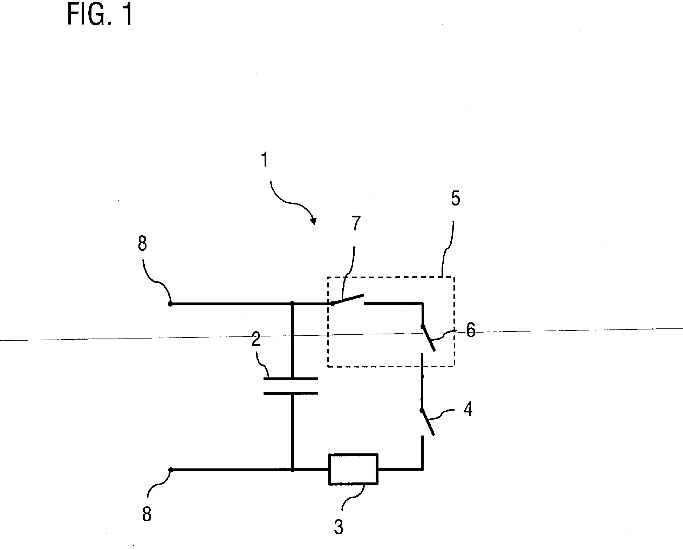

Die zuvor beschriebenen bevorzugten Ausführungsformen und Merkmale der Erfindung sind beliebig miteinander kombinierbar. Weitere Einzelheiten und Vorteile der Erfindung werden im Folgenden unter Bezug auf die beigefügte Figur 1 beschrieben, die ein schematisches Blockschaltbild einer Schaltungsanordnung gemäß einer Ausführungsform der Erfindung zeigt.

Die Schaltungsanordnung umfasst einen Ultrakondensator (Ultracap-Speicher) 2, der über die Anschlüsse 8 mit einer elektrischen Maschine, z. B. in Form eines Kurbelwellenstartergenerators (KSG) (nicht dargestellt) eines Kraftfahrzeugs, bzw. dem Bordnetz, Teilbordnetz oder einem Hochvoltnetz des Fahrzeugs verbunden ist, um die elektrische Maschine im motorischen Betrieb der elektrischen Maschine mit elektrischer Energie zu versorgen und um im generatorischen Betrieb der elektrischen Maschine erzeugte elektrische Energie zu speichern.

Die Schaltungsanordnung umfasst ferner eine autarke Entladeschaltung 1 für den Ultrakondensator 2, die sich selbst aus dem Ultrakondensator 2 versorgt. Die Entladeschaltung 1 ist aus einer Reihenschaltung aus einem Entladewiderstand 3, einem Spannungsvergleichsglied 4 und einer Aktivierungsschaltvorrichtung 5 gebildet. Die Aktivierungsschaltvorrichtung 5 ist eingerichtet, nach Ablauf einer Latenzphase seit einem Abstellen des Kraftfahrzeugs einen Entladevorgang des Energiespeichers 2 über den Entladewiderstand 3 zu starten.

Hierzu ist die Aktivierungsschaltvorrichtung 5 als Reihenschaltung aus einem Zeitschalter 6 und einem Schalter 7, der mit der Klemme 15 des Fahrzeugs gekoppelt ist (nicht dargestellt), ausgeführt. Der Schalter 7 wird geschlossen, wenn an der Klemme 15 das "Zündschalter aus"-Signal vorliegt, d. h., der Schalter 7 wird beim Ausschalten der Zündung, was einen Abstellvorgang anzeigt, geschlossen. Der Zeitschalter 6 ist zu diesem Zeitpunkt noch offen und wird erst nach einer vorbestimmten Latenzzeit nach dem Abstellen des Fahrzeugs, vorzugsweise nach dem Ausschalten eines Zündschalters und damit nach dem Schließen des Schalters 7, geschlossen. Die Latenzzeit kann beispielsweise einen Wert aufweisen, der im Bereich von 10 bis 30 Minuten liegt.

Vorstehend wurde bereits erwähnt, dass anstatt des Zeitschalters 6 auch ein Temperaturschalter verwendet werden kann, der in Abhängigkeit eines Temperatursignals, das z. B. die Temperatur des Verbrennungsmotors (nicht gezeigt) misst, geschaltet wird. Gemäß dieser Variante wird der Temperaturschalter geschlossen, wenn der Verbrennungsmotor nach dem Abschalten auf ein vorbestimmtes Temperaturniveau abgekühlt ist.

Das Spannungsvergleichsglied 4 ist als passiver Spannungsvergleichsschalter 4 ausgeführt, der geschlossen ist, wenn die aktuelle Energiespeicherspannung größer als ein vorbestimmter Spannungsschwellenwert ist, und der geöffnet ist, wenn die aktuelle Energiespeicherspannung kleiner gleich dem vorbestimmten Spannungsschwellenwert ist. Der vorbestimmte Spannungsschwellenwert wird auf ein mittleres Spannungsniveau des Ultrakondensators 2 festgelegt.

Bei nicht abgestelltem Fahrzeug, d. h. im normalen Fahrbetrieb, sind somit die Schalter 6 und 7 geöffnet. Stellt der Fahrer das Fahrzeug ab, d. h. wird der Zündschalter geöffnet, so dass die Spannung an der Klemme 15 auf null abfällt bzw. das "Zündschalter aus"-Signal an der Klemme anliegt, wird der Schalter 7 geschlossen. Der Schalter 6 ist vorerst noch geöffnet. Nach Ablauf der Latenzzeit wird auch der Schalter 6 geschlossen. Liegt zu diesem Zeitpunkt die Ladespannung des Ultrakondensators 2 über dem vorbestimmten Spannungsschwellenwert, entlädt sich der Ultrakondensator 2 über den Entladewiderstand 3. Der Entladevorgang wird beendet, falls die aktuelle Ladespannung des Ultrakondensators 2 auf den vorbestimmten Spannungsschwellenwert gesunken ist, da sich dann der Spannungsvergleichsschalter 4 öffnet.

Obwohl die Erfindung unter Bezugnahme auf bestimmte Ausführungsbeispiele beschrieben worden ist, ist es für einen Fachmann ersichtlich, dass verschiedene Änderungen ausgeführt werden können, ohne den Bereich der Erfindung zu verlassen. Zusätzlich können viele Modifikationen ausgeführt werden, ohne den zugehörigen Bereich zu verlassen. Folglich soll die Erfindung nicht auf die offenbarten Ausführungsbeispiele begrenzt sein, sondern soll alle Ausführungsbeispiele umfassen, die in den Bereich der beigefügten Patentansprüche

### Bezugszeichenliste

- 1: Entladeschaltung
- 2: Ultracap-Speicher
- 3: Widerstand
- 4: Spannungsvergleichsschalter
- 5: Aktivierungsschaltvorrichtung
- 6: Zeitschalter
- 7: Schalter, gekoppelt an Klemme 15
- 8: Verbindung zum Bordnetz

## Patentansprüche

1. Kraftfahrzeug, umfassend eine Schaltungsanordnung zum Entladen eines Energiespeichers des Kraftfahrzeugs, wobei die Schaltungsanordnung aufweist:
einen Energiespeicher (2) für elektrische Energie, der zur Versorgung einer elektrischen Maschine des Kraftfahrzeugs vorgesehen ist; und
eine Entladeschaltung (1), die über den Energiespeicher (2) mit Spannung versorgt ist und einen Entladewiderstand (3), ein Spannungsvergleichsglied (4) und eine Aktivierungsschaltvorrichtung (5) aufweist,
wobei die Aktivierungsschaltvorrichtung (5) eingerichtet ist, nach Ablauf einer Latenzphase seit einem Abstellen des Kraftfahrzeugs einen Entladevorgang des Energiespeichers (2) über den Entladewiderstand (3) zu starten, und/oder wobei die Aktivierungseinrichtung nach Ablauf der Latenzphase getriggert wird, den Entladevorgang des Energiespeichers (2) über den Entladewiderstand (3) zu starten, und
wobei das Spannungsvergleichsglied (4) eingerichtet ist, einen Spannungsvergleich zwischen einer aktuellen Energiespeicherspannung und einem Spannungsschwellenwert vorzunehmen und den Entladevorgang des Energiespeichers (2) zu beenden, wenn bei dem Spannungsvergleich die aktuelle Energiespeicherspannung kleiner gleich dem Spannungsschwellenwert ist;
**gekennzeichnet durch** eine Reihenschaltung aus dem Entladewiderstand (3), dem Spannungsvergleichsglied (4) und der Aktivierungsschaltvorrichtung (5);
**dadurch, dass** die Aktivierungsschaltvorrichtung (5) einen Zeitschalter (6) umfasst, der nach einer vorbestimmten Latenzzeit nach dem Ausschalten eines Zündschalters geschlossen wird; und
dass der Spannungsschwellenwert einem mittleren Spannungsniveau des Energiespeichers (2) entspricht, sodass der Energiespeicher (2) nicht vollständig entladen wird.

2. Kraftfahrzeug nach Anspruch 1, **dadurch gekennzeichnet, dass** die Aktivierungsschaltvorrichtung (5) einen zum Zeitschalter (6) in Reihe angeordneten Schalter (7) umfasst, der mit der Klemme15 des Fahrzeugs gekoppelt ist, derart, dass der Schalter (7) geschlossen ist, wenn an der Klemme 15 das "Zündschalter aus"-Signal vorliegt.

3. Kraftfahrzeug nach einem der vorhergehenden Ansprüche, **dadurch gekennzeichnet, dass** der Energiespeicher (2) ein kapazitiver Energiespeicher, vorzugsweise ein Ultracap-Speicher (2) ist.

4. Kraftfahrzeug nach einem der vorhergehenden Ansprüche, wobei das Kraftfahrzeug ein Nutzfahrzeug ist.

5. Kraftfahrzeug, umfassend eine Schaltungsanordnung zum Entladen eines Energiespeichers des Kraftfahrzeugs, wobei die Schaltungsanordnung aufweist:
einen Energiespeicher (2) für elektrische Energie, der zur Versorgung einer elektrischen Maschine des Kraftfahrzeugs vorgesehen ist; und
eine Entladeschaltung (1), die über den Energiespeicher (2) mit Spannung versorgt ist und einen Entladewiderstand (3), ein Spannungsvergleichsglied (4) und eine Aktivierungsschaltvorrichtung (5) aufweist,
wobei die Aktivierungsschaltvorrichtung (5) eingerichtet ist, nach Ablauf einer Latenzphase seit einem Abstellen des Kraftfahrzeugs einen Entladevorgang des Energiespeichers (2) über den Entladewiderstand (3) zu starten, und/oder wobei die Aktivierungseinrichtung nach Ablauf der Latenzphase getriggert wird, den Entladevorgang des Energiespeichers (2) über den Entladewiderstand (3) zu starten, und
wobei das Spannungsvergleichsglied (4) eingerichtet ist, einen Spannungsvergleich zwischen einer aktuellen Energiespeicherspannung und einem Spannungsschwellenwert vorzunehmen und den Entladevorgang des Energiespeichers (2) zu beenden, wenn bei dem Spannungsvergleich die aktuelle Energiespeicherspannung kleiner gleich dem Spannungsschwellenwert ist;
**gekennzeichnet durch** eine Reihenschaltung aus dem Entladewiderstand (3), dem Spannungsvergleichsglied (4) und der Aktivierungsschaltvorrichtung (5);
**dadurch, dass** die Aktivierungsschaltvorrichtung (5) einen Temperaturschalter umfasst, der geschlossen wird, wenn ein Temperatursignal einen vorbestimmten Temperaturschwellenwert unterschreitet, wobei das Temperatursignal den Temperaturverlauf eines Bauteils, vorzugsweise einer Brennkraftmaschine, angibt, das sich nach dem Abstellen des Kraftfahrzeugs abkühlt; und
dass der Spannungsschwellenwert einem mittleren Spannungsniveau des Energiespeichers (2) entspricht, sodass der Energiespeicher (2) nicht vollständig entladen wird.

6. Kraftfahrzeug nach Anspruch 5, **dadurch gekennzeichnet, dass** die Aktivierungsschaltvorrichtung (5) einen zum Temperaturschalter in Reihe angeordneten Schalter (7) umfasst, der mit der Klemme 15 des Fahrzeugs gekoppelt ist, derart, dass der Schalter (7) geschlossen ist, wenn an der Klemme 15 das "Zündschalter aus"-Signal vorliegt.

7. Kraftfahrzeug nach einem der Ansprüche 5 oder 6, **dadurch gekennzeichnet, dass** der Energiespeicher (2) ein kapazitiver Energiespeicher, vorzugsweise ein Ultracap-Speicher (2) ist.

8. Kraftfahrzeug nach einem der Ansprüche 5 bis 7, wobei das Kraftfahrzeug ein Nutzfahrzeug ist.

## Claims

1. A motor vehicle, comprising a circuit arrangement for discharging an energy storage device of the motor vehicle, the circuit arrangement comprising
an energy storage device (2) for electrical energy, which is provided for supplying an electrical machine of the motor vehicle; and
a discharge circuit (1), which is supplied with voltage via the energy storage device (2) and comprises a discharge resistor (3), a voltage comparison element (4), and an activation switching device (5),
wherein the activation switching device (5) is configured to start a discharging process of the energy storage device (2) via the discharging resistor (3) after a latency phase has elapsed since the motor vehicle has been parked, and/or wherein the activation device is triggered to start the discharging process of the energy storage device (2) via the discharging resistor (3) after the latency phase has elapsed, and
wherein the voltage comparison element (4) is configured to perform a voltage comparison between a current energy storage device voltage and a voltage threshold value and to terminate the discharging process of the energy storage device (2) if the current energy storage device voltage is less than or equal to the voltage threshold value during the voltage comparison;
**characterised by** a series connection of the discharge resistor (3), the voltage comparison element (4), and the activation switching device (5);
in that the activation switching device (5) comprises a timer switch (6), which is closed after a predetermined latency time after an ignition switch is switched off; and
in that the voltage threshold value corresponds to an average voltage level of the energy storage device (2), so that the energy storage device (2) is not completely discharged.

2. The motor vehicle according to claim 1, **characterised in that** the activation switching device (5) comprises a switch (7), which is arranged in series with the timer switch (6) and which is coupled to terminal 15 of the vehicle in such a way that the switch (7) is closed when the "ignition switch off" signal is present at terminal 15.

3. The motor vehicle according to one of the preceding claims, **characterised in that** the energy storage device (2) is a capacitive energy storage device, preferably an ultracap storage device (2).

4. The motor vehicle according to one of the preceding claims, wherein the motor vehicle is a commercial vehicle.

5. A motor vehicle, comprising a circuit arrangement for discharging an energy storage device of the motor vehicle, the circuit arrangement comprising
an energy storage device (2) for electrical energy, which is provided for supplying an electrical machine of the motor vehicle; and
a discharge circuit (1), which is supplied with voltage via the energy storage device (2) and comprises a discharge resistor (3), a voltage comparison element (4), and an activation switching device (5),
wherein the activation switching device (5) is configured to start a discharging process of the energy storage device (2) via the discharging resistor (3) after a latency phase has elapsed since the motor vehicle has been parked, and/or wherein the activation device is triggered to start the discharging process of the energy storage device (2) via the discharging resistor (3) after the latency phase has elapsed, and
wherein the voltage comparison element (4) is configured to perform a voltage comparison between a current energy storage device voltage and a voltage threshold value and to terminate the discharging process of the energy storage device (2) if the current energy storage device voltage is less than or equal to the voltage threshold value during the voltage comparison;
**characterised by** a series connection of the discharge resistor (3), the voltage comparison element (4), and the activation switching device (5);
in that the activation switching device (5) comprises a temperature switch, which is closed when a temperature signal falls below a predetermined temperature threshold value, the temperature signal indicating the temperature profile of a component, preferably of an internal combustion engine, which cools down after the motor vehicle has been switched off; and
in that the voltage threshold value corresponds to an average voltage level of the energy storage device (2), so that the energy storage device (2) is not completely discharged.

6. The motor vehicle according to claim 5, **characterised in that** the activation switching device (5) comprises a switch (7), which is arranged in series with the temperature switch and which is coupled to terminal 15 of the vehicle in such a way that the switch (7) is closed when the "ignition switch off" signal is present at terminal 15.

7. The motor vehicle according to one of claims 5 or 6, **characterised in that** the energy storage device (2) is a capacitive energy storage device, preferably an ultracap storage device (2).

8. The motor vehicle according to one of claims 5 to 7, wherein the motor vehicle is a commercial vehicle.

## Revendications

1. Véhicule automobile, comprenant un système de circuit destiné à décharger un accumulateur d'énergie du véhicule automobile, le système de circuit comprenant :
un accumulateur d'énergie (2) destiné à stocker de l'énergie électrique, qui est prévu pour l'alimentation d'une machine électrique du véhicule automobile ; et
un circuit de décharge (1), qui est alimenté en tension par l'intermédiaire de l'accumulateur d'énergie (2) et qui comporte une résistance de décharge (3), un comparateur de tension (4) et un dispositif de commutation d'activation (5),
le dispositif de commutation d'activation (5) étant conçu pour démarrer un processus de décharge de l'accumulateur d'énergie (2) par l'intermédiaire de la résistance de décharge (3) après écoulement d'une phase de latence commençant lors d'un arrêt du véhicule automobile, et/ou le dispositif d'activation étant déclenché après écoulement de la phase de latence pour démarrer le processus de décharge de l'accumulateur d'énergie (2) par l'intermédiaire de la résistance de décharge (3), et
le comparateur de tension (4) étant conçu pour effectuer une comparaison de tension entre une tension actuelle de l'accumulateur d'énergie et une valeur de seuil de tension et pour interrompre le processus de décharge de l'accumulateur d'énergie (2) si, lors de la comparaison de tension, la tension actuelle de l'accumulateur d'énergie est inférieure ou égale à la valeur de seuil de tension ;
**caractérisé par** un montage en série de la résistance de décharge (3), du comparateur de tension (4) et du dispositif de commutation d'activation (5) ;
en ce que le dispositif de commutation d'activation (5) comprend une minuterie (6) qui est fermée au bout d'un temps de latence prédéterminé après la coupure d'un contacteur d'allumage ; et
en ce que la valeur de seuil de tension correspond à un niveau de tension moyen de l'accumulateur d'énergie (2), de sorte que l'accumulateur d'énergie (2) n'est pas entièrement déchargé.

2. Véhicule automobile selon la revendication 1, **caractérisé en ce que** le dispositif de commutation d'activation (5) comprend un commutateur (7) disposé en série avec la minuterie (6) et couplé à la borne (15) du véhicule, de telle sorte que le commutateur (7) est fermé lorsque le signal "contact coupé" est présent sur la borne (15).

3. Véhicule automobile selon l'une quelconque des revendications précédentes, **caractérisé en ce que** l'accumulateur d'énergie (2) est un accumulateur d'énergie capacitif, de préférence un accumulateur Ultracap (2).

4. Véhicule automobile selon l'une quelconque des revendications précédentes,
dans lequel le véhicule automobile est un véhicule utilitaire.

5. Véhicule automobile, comprenant un système de circuit destiné à décharger un accumulateur d'énergie du véhicule automobile,
le système de circuit comprenant :
un accumulateur d'énergie (2) destiné à stocker de l'énergie électrique, qui est prévu pour l'alimentation d'une machine électrique du véhicule automobile ; et
un circuit de décharge (1) qui est alimenté en tension par l'intermédiaire de l'accumulateur d'énergie (2) et qui comprend une résistance de décharge (3), un comparateur de tension (4) et un dispositif de commutation d'activation (5),
le dispositif de commutation d'activation (5) étant conçu pour démarrer un processus de décharge de l'accumulateur d'énergie (2) par l'intermédiaire de la résistance de décharge (3) après écoulement d'une phase de latence commençant lors d'un arrêt du véhicule automobile, et/ou le dispositif d'activation étant déclenché après écoulement de la phase de latence pour démarrer le processus de décharge de l'accumulateur d'énergie (2) par l'intermédiaire de la résistance de décharge (3), et
le comparateur de tension (4) étant conçu pour effectuer une comparaison de tension entre une tension actuelle de l'accumulateur d'énergie et une valeur de seuil de tension et pour interrompre le processus de décharge de l'accumulateur d'énergie (2) si, lors de la comparaison de tension, la tension actuelle de l'accumulateur d'énergie est inférieure ou égale à la valeur de seuil de tension ;
**caractérisé par** un montage en série de la résistance de décharge (3), du comparateur de tension (4) et du dispositif de commutation d'activation (5) ;
en ce que le dispositif de commutation d'activation (5) comprend un commutateur de température qui est fermé lorsqu'un signal de température est inférieur à une valeur de seuil de température prédéterminée,
le signal de température indiquant l'évolution de la température d'un composant, de préférence d'un moteur à combustion interne, qui se refroidit après l'arrêt du véhicule automobile ; et
en ce que la valeur de seuil de tension correspond à un niveau de tension moyen de l'accumulateur d'énergie (2), de sorte que l'accumulateur d'énergie (2) n'est pas entièrement déchargé.

6. Véhicule automobile selon la revendication 5, **caractérisé en ce que** le dispositif de commutation d'activation (5) comprend un commutateur (7) disposé en série avec le commutateur de température, qui est couplé à la borne du véhicule de telle sorte que le commutateur (7) est fermé lorsque le signal "contact coupé" est présent sur la borne.

7. Véhicule automobile selon l'une quelconque des revendications 5 ou 6, **caractérisé en ce que** l'accumulateur d'énergie (2) est un accumulateur d'énergie capacitif, de préférence un accumulateur Ultracap (2).

8. Véhicule automobile selon l'une quelconque des revendications 5 à 7, dans lequel le véhicule automobile est un véhicule utilitaire.
